# EUROPEAN PATENT SPECIFICATION

(11) **EP 3 295 045 B1**
(45) Date of publication and mention of the grant of the patent: **24.07.2019**
(21) Application number: 16705468.3
(22) Date of filing: 12.02.2016
(51) Int. Cl.: F16B 45/00, B29C 45/00, A01K 27/00

(54) **PROCEDURE FOR MAKING A ROTATING CONNECTION OF AN AUTOMATIC SAFETY SPRING CLIP WITH A ROTATING RING AND CONNECTION MADE IN THIS WAY**
VERFAHREN ZUR HERSTELLUNG EINER DREHVERBINDUNG EINER AUTOMATISCHEN SICHERHEITSFEDERKLEMME MIT EINEM DREHRING UND AUF DIESE WEISE HERGESTELLTE VERBINDUNG
PROCÉDÉ SERVANT À RÉALISER UNE LIAISON ROTATIVE D'UNE ATTACHE À RESSORT DE SÛRETÉ AUTOMATIQUE AVEC UNE BAGUE ROTATIVE ET LIAISON RÉALISÉE DE CETTE FAÇON

(30) Priority: 08.05.2015 IT VR20150076
(43) Date of publication of application: 21.03.2018
(73) Proprietor: Ferplast SpA, 36070 Castelgomberto (VI) (IT)
(72) Inventor: VACCARI, Carlo, 36070 Castelgomberto (VI) (IT)
(74) Representative: Sandri, Sandro
(86) International application number: PCT/EP2016/053056
(87) International publication number: WO 2016/180548

(56) References cited:
- US-A1- 2006 179 784
- US-B1- 6 261 499

## Description

### TECHNICAL FIELD

This invention relates to a procedure for making a rotating connection of an automatic safety spring clip made of synthetic material with a rotating ring and connection also made of synthetic material.

More specifically, the procedure according to the invention comprises the making of a connection between the spring clip and the ring by moulding in two steps of two parts each made of synthetic material, in particular a rotating ring and a body of the spring clip equipped with pin for connecting to the ring.

With reference to the invention, the moulding is performed by making the respective synthetic plastic materials used to make the ring and the body of the spring clip incompatible with each other beforehand, complying with certain geometrical details and obtaining a finished product which has a high resistance to traction of the two assembled parts, guaranteeing at the same time a fluid and free rotating movement of the ring.

This invention can be advantageously applied in the sector of accessories for pets, and, more specifically, in the field of retaining means for dogs or other similar pets, but may also be used in many other sectors such as, for example, in the sports, nautical or mountaineering sectors, or in that of packaging, or applications which involve the use of ties, or the like.

### BACKGROUND ART

According to the prior art currently in use, a spring clip, which may have different shapes and is usually made of steel or lightweight alloys, has one side which can be opened by a lever, if necessary locked by a ring nut.

The spring clip is used where it is necessary to join two elements in a quick, safe and reusable manner, and for this reason it is often used for sports such as climbing, mountaineering, paragliding and caving, but also for other uses different from the sports sector, for example, for attaching the leash to the collar of pets.

In effect, pets and in particular dogs, are walked outdoors using leashes, the strap of which can be fastened in some cases to the collar applied to the neck of the animal, or in other cases to a harness, which retains the animal not by the neck but by the entire front part of the body.

Again in the case of pets, it is also known that the leash is equipped at one end with a grip which allows it to be gripped by the owner and at the other end with a spring clip for attaching it to the collar.

In any case, the spring clip generally consists of a central body having a first longitudinal end provided with a ring for fixed connection with the leash, and a second hook-shaped end or hook which can be closed by a pin slidable in an axial direction in order to attach to the object to be retained, such as the ring of the collar, or other element.

A drawback found with the use of traditional spring clips made of plastic relates to the fact that the ring, which represents the second means of joining the two parts to be joined relative to the first means consisting of the spring clip, is keyed or in any case fixed on a pin which is integral with the base of the spring clip, which usually consists of a sort of screw with a head which is fixed mainly by simply screwing in a threaded seat in the base, which constitute the conditions necessary for a poor resistance to wear and to stresses of the ring.

In other contexts, the pin for coupling the rear ring is fixed in other ways to the body of the spring clip, but in any case a poor resistance of the pin has still been found in the traditional solutions relative to the ring which is stressed both in a rotational direction and an axial direction during the traction steps.

In contexts such as leashes for large pets and in the climbing or nautical sports sector, in which, on the one hand, a certain speed of action is required especially in emergency situations and, on the other hand, a secure and robust resistance of the rear rotary ring is required, the use of the traditional spring clips might prove to be quite unsure and in some cases become even dangerous due to unpredictable consequences due to locking and/or breakage of the pin for coupling the ring to the body of the spring clip.

These situations constitute risks for the user who, in the case of a leash, may suffer rotational jamming of the ring or breakage of the pin of the spring clip during strong jolting if the animal being held is large, whilst in other cases, such as in the sports sector, the user may be subject to unpredictable and uncontrollable consequences.

Document US 6261499 B1 discloses a method for movably connecting two members. The method includes the steps of moulding a first member within a second mould portion. The method also includes inserting molten material into the second mould portion to form a second member, whereby at least one of the first material and the second material has enhanced lubricity properties so as to reduce the propensity of the first material and the second material to adhere to each other. The method further includes limiting contact between the first member and the material to prevent bonding between the first member and the material to permit relative motion between the members.

Document US 2006/0179784 A1 discloses a swivel hook including a metallic ring portion defining a hollow inner space and having an external engaging section; a first connecting portion having an upper section rotatably received in the inner space of the ring portion; and a second connecting portion rotatably engaged with the engaging section of the ring portion. The swivel hook is integrally formed by positioning the ring portion in a mould to sequentially or simultaneously form the first and the second connecting portion, so that the upper section of the first connecting portion is firmly attached to an inner wall surface of the ring portion, and the second connecting portion is engaged with the engaging section on the ring portion; and then downward pulling of the first connecting portion of the initially moulded swivel hook to allow it to freely rotate in the inner space of the ring portion.

### DESCRIPTION OF THE INVENTION

The aim of this invention is to provide a procedure for making a rotating connection of an automatic safety spring clip with a rotating ring, and in particular which is able to link a rotating ring to a pin located in the rear part of the spring clip opposite the fastening part by means of moulding of plastic materials which are incompatible with each other with the aim of preventing mutual welding, thereby creating a condition which is able to eliminate or at least reduce the above-mentioned drawbacks.

The invention aims in particular to provide a procedure for making by means of moulding entirely plastic materials but of two types which are intrinsically incompatible with each other or made incompatible with each other for example by means of special additives, thus creating an articulated constraint of the rear ring which is able to guarantee a good resistance to traction.

To obtain these features a particular solution has been adopted which, exploiting the incompatibility between the plastic used for the ring and the plastic used for the body of the spring clip, as well as a geometrical detail, directly obtains the object with overmoulding.

This is achieved by means of a procedure whose features are described in the main claim.

The dependent claims of the solution according to this invention describe advantageous embodiments of the invention.

The main advantages of this solution relate to the fact that, by actuating the procedure according to the invention, it is possible to obtain spring clips made in two pieces from synthetic material fixed to each other in a secure and permanent manner and with high mechanical performance levels, and at the same time guaranteeing a movement relative to each other.

A further advantage provided by the procedure according to the invention is that of making spring clips complete with a rear rotating ring obtained in two steps by overmoulding using two plastic materials incompatible with each other, obtaining a resistance to traction comparable with that of metal spring clips but with a considerable reduction in costs due to the use of plastic materials.

### DESCRIPTION OF THE DRAWINGS

Other features and advantages of the invention will become clear on reading the description given below of one embodiment, provided as a non-limiting example, with the help of the accompanying drawings, in which:
- Figure 1 is a side view of the spring clip according to the invention in the overmoulding condition;
- Figure 2 is a cross section view through the line B-B of Figure 1 of the spring clip according to this invention;
- Figure 3 is a cross section view of a detail "C" of Figure 2;
- Figure 4 is a schematic view of the spring clip according to the invention in the use condition;
- Figure 5 is a cross section view through the line B-B of Figure 4 of the spring clip according to this invention;
- Figure 6 is a cross section view of a detail "D" of Figure 2;
- Figure 7 is a perspective view of the spring clip in its entirety.

### DESCRIPTION OF AN EMBODIMENT OF THE INVENTION

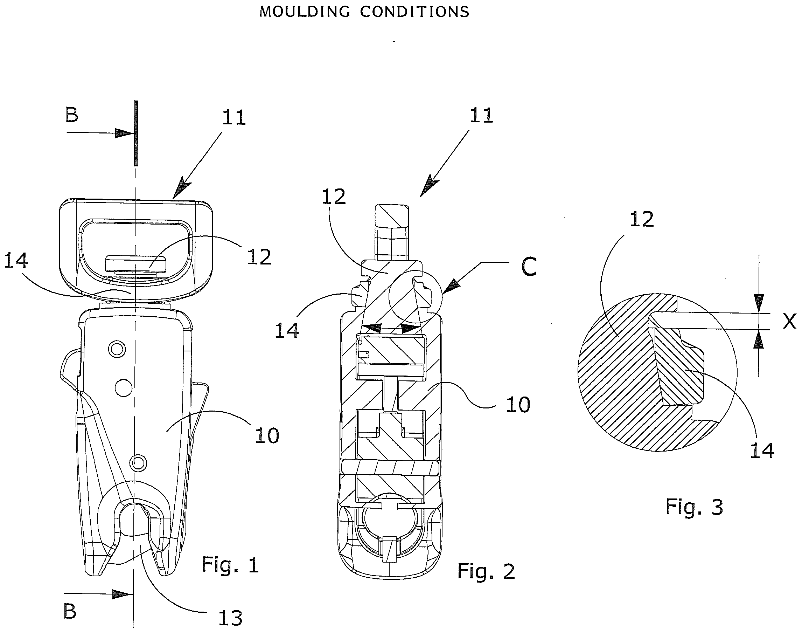

With reference to the accompanying drawings, and initially in particular to Figures 1 to 2, the numeral 10 indicates generally a spring clip to which a ring 11 is associated, held to the spring clip by a pin 12 equipped with a large head which prevents the ring from coming off the body of the pin.

In terms of construction, the body 10 of the spring clip, which in the front part comprises a hook 13 positioned in opposition or in attraction relative to elastic or magnetic means, is coupled at the back to the ring 11 which in turn comprises a hole with a truncated cone or truncated pyramid shape, in the embodiment illustrated with the vertex facing towards the inside of the ring, delimited by a closed collar 14 which is substantially circular (or polygonal) lying with its plane at right angles to the plane of the ring, designed to receive the pin 12 using the construction procedure according to the invention.

The first step of the procedure comprises the independent moulding of the ring 11, equipped with a truncated cone or truncated pyramid shaped hole delimited by the circular or polygonal collar 14, generally by using acetal resin, which makes it possible to obtain the ring equipped with a hole defined by the collar 14, the centre of which defines the axis of rotation.

More specifically, according to the invention, the ring 11 is made of acetal resin type POM, that is, polyoxymethylene, a crystalline polymer consisting of chains in which a methylene group and an atom of oxygen are repeated (this block is called oxymethylene), which provides a high strength plastic material at a relatively low cost, known also with the trade names of Zellamid 900®, Delrin®, Tecaform®, Kepital®, Kematal® and Ertacetal®.

The second processing step comprises inserting the ring into a mould for forming the body 10 of the spring clip, and the moulding of the body of the spring clip using a plastic material which is intrinsically incompatible, or made incompatible, for example by special additives, with that of the ring 11.

In the second step, that is to say, in the moulding of plastic material for making the body 10 of the spring clip, the molten plastic material penetrates into the hole delimited by the circular or polygonal collar 14 of the ring 11, leading inside the ring to terminate with a wide head shape, forming in this way both the pin and the retaining element for the ring. It should be noted that the pin 12 also has a truncated cone or truncated pyramid shape, the smaller base of which ends with the wide head inside the ring, which remains constrained there but with the possibility of axial rotation.

Figure 1 and the detail of Figure 3 shows the position which the collar 14 of the ring 11 adopts in the moulding step of the body 10, that is to say, a position in which the collar 14 is located in perfect contact on the body 10 of the spring clip along the entire truncated cone (inside and outside) consisting of the shaping of the pin 12.

More specifically, according to an embodiment of the invention, the body 10 of the spring clip is made from a plastic resin of the PBT (polybutylene terephthalate) or PA (polyamide - nylon) type or other similar material, even mixed with mineral fillers such as glass, talc, calcium, etc. or other material of a type incompatible with the material with which the ring 11 is made, in such a way that during the second step of moulding the plastic of the body of the spring clip, and the relative pin with which it forms a single body, it does not adhere, welding itself during fusion to the body of the ring 11.

As mentioned above, according to a preferred embodiment of the invention, the body 10 of the spring clip is made with a plastic resin which has features of chemical incompatibility with the material of the ring 11, for example, the polybutylene terephthalate or the polyamide of the body 10 relative to the polyoxymethylene of the ring 11, and the particular truncated cone shape of the holes of the collar 14 of the ring and of the pin 12 made in the rear part allows a relative post-moulding translation between the two components (ring and body) according to the measurement "X" defined in Figure 3, which allows a clearance to be created between the two elements such as to allow the relative movement between the two, which may be of the rotary or axial translating type.

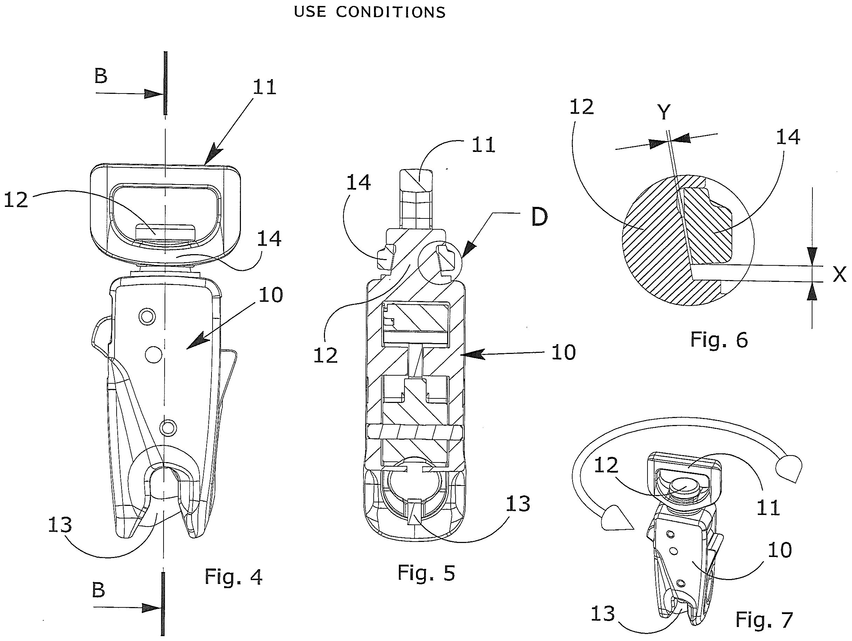

Figure 4 shows the schematic view of the spring clip according to the invention in the operating condition, in which the ring is translated axially towards the head of the pin 12 in such a way as to create the desired and necessary clearance in order to guarantee a fluid and free rotary movement of the collar 14 relative to the pin 12.

More specifically, the axial translational movement of the collar 14 of the ring relative to the pin 12 according to the measurement X after the step of solidification and extraction from the mould, determines the disengagement between the two parts constituted by the body 10 and the ring 11, that is, between the collar 14 and the pin 12, in such a way that, as shown in Figure 6, the hole of the collar 14 of the ring 11 remains disengaged from the pin 12 since following the detachment and the translation of the collar a cavity is formed with the measurement Y in Figure 6, allowing the free axial rotation of the ring 11 relative to the pin 12.

This makes it possible to obtain two pieces made from plastic material fixed to each other in a secure and permanent manner and with high mechanical performance levels, guaranteeing at the same time a relative movement between the ring and the pin of the spring clip.

The invention as described above refers to a preferred embodiment. It is nevertheless clear that the invention is susceptible to numerous variations which lie within the scope of its disclosure, in the framework of technical equivalents.

More specifically, the drawings illustrated in this invention show an embodiment in which the collar and the body of a pin have a truncated cone shape. It is evident that the collar and the body of a pin may also adopt a truncated pyramid shape, in which the base polygon may have any number of sides.

## Claims

1. A procedure for making a rotating connection of an automatic safety spring clip with a rotating ring (11), the spring clip consisting of a body (10) equipped at the front with coupling means (13) and at the back with a widened-head pin (12), attached to a ring (11) comprising an opening bordered by a closed collar (14) whose plane is at right angles to the plane of the ring (11), whereby the body of the pin (12) is shaped to match the shape of the collar (14), the body of the pin (12) and the collar (14) of the ring having a truncated cone or truncated pyramid shape, **characterised in that** the spring clip and the ring are connected as follows:
a) moulding of the ring (11), provided with a collar (14), using a first plastic material subject to heat-moulding and solidification, and production of a ring with a hole and presenting a collar (14) with an opening whose centre defines the axis of rotation;
b) insertion of the ring obtained in step a) in the relative housing of a mould for the formation of the body (10) of a spring clip with a rear portion consisting of a pin (12) with a body that can be coupled with the opening of the collar (14) and with a widened head;
c) moulding of the body of the spring clip using a second plastic material subject to heat-fusion and solidification, this second plastic material being intrinsically incompatible or rendered incompatible during fusion with the first material from which the ring (11) is made;
d) once solidification has been achieved, axial translation of the ring with respect to the body of the pin (12) in order to create play between the respective surfaces having a truncated cone or truncated pyramid shape by disengaging them from each other, thereby allowing a free rotation of the ring (11) around the pin (12).

2. A procedure according to claim 1, **characterised in that** the ring (11) is made of acetal resin such as POM, polyoxymethylene.

3. A procedure according to either of the foregoing claims, **characterised in that** the body (10) of the spring clip is made by fusion of a plastic resin such as PBT (polybutylene terephthalate) or PA (polyamide - nylon), or another material which is heat-incompatible with the material from which the ring is made (11).

4. A safety spring clip (10) equipped with front coupling means (13) and a rear pin (12) with a widened head, connected to a rotating ring (11), **characterised in that** the body of the spring clip is made from a first plastic material, **in that** the body of the rotating ring (11) is equipped with a collar (14) and is made from a second plastic material, and **in that** the first and second plastic materials are intrinsically incompatible or rendered incompatible with each other and cannot be fused or in any way welded together and **in that** the body of the pin (12) and the collar (14) of the ring have a truncated cone or truncated pyramid shape.

5. A spring clip according to claim 4, **characterised in that** it is obtained by means of a procedure according to any one of claims 1 to 3.

## Patentansprüche

1. Verfahren zur Herstellung einer sich drehenden Verbindung einer automatischen Sicherheitsfederklemme mit einem sich drehenden Ring (11), wobei die Federklemme aus einem Körper (10) besteht, welcher auf der Vorderseite mit Kupplungsmitteln (13) und auf der Rückseite mit einem Stift (12) mit verbreitertem Kopf ausgestattet ist, der an einem Ring (11) angebracht ist, umfassend eine Öffnung, die von einem geschlossenen Kragen (14) abgegrenzt wird, dessen Ebene unter rechten Winkeln zu der Ebene des Rings (11) angeordnet ist, wodurch der Körper des Stifts (12) geformt ist, um mit der Form des Kragens (14) übereinzustimmen, wobei der Körper des Stifts (12) und der Kragen (14) des Rings eine Form eines Kegelstumpfs oder Pyramidenstumpfs aufweisen, **dadurch gekennzeichnet, dass** die Federklemme und der Ring wie folgt verbunden werden:
a) Formen des Rings (11), der mit einem Kragen (14) versehen ist, unter Verwendung eines ersten Kunststoffmaterials, das einem Wärmeformen und Verfestigen unterzogen wird, und Erzeugen eines Rings mit einem Loch, und der einen Kragen (14) aufweist, mit einer Öffnung, deren Zentrum die Drehachse definiert;
b) Einsetzen des in Schritt a) erhaltenen Rings in das relative Gehäuse einer Form zur Bildung des Körpers (10) einer Federklemme mit einem hinteren Abschnitt, welcher aus einem Stift (12) mit einem Körper, der mit der Öffnung des Kragens (14) gekuppelt werden kann, und mit einem verbreiterten Kopf besteht;
c) Formen des Körpers der Federklemme unter Verwendung eines zweiten Kunststoffmaterials, das einem Wärmeschmelzen und einem Verfestigen unterzogen wird, wobei dieses zweite Kunststoffmaterial während des Schmelzens mit dem ersten Material, aus dem der Ring (11) hergestellt ist, intrinsisch inkompatibel ist oder inkompatibel gemacht wird;
d) sobald das Verfestigen erzielt wurde, axiale translatorische Verschiebung des Rings in Bezug auf den Körper des Stifts (12), um ein Spiel zwischen den jeweiligen Flächen mit der Form eines Kegelstumpfs oder Pyramidenstumpfs zu erzeugen, indem diese voneinander gelöst werden, wodurch eine freie Drehung des Rings (11) um den Stift (12) gestattet wird.

2. Verfahren nach Anspruch 1, **dadurch gekennzeichnet, dass** der Ring (11) aus Acetalharz, wie POM, Polyoxymethylen, hergestellt wird.

3. Verfahren nach einem der vorhergehenden Ansprüche, **dadurch gekennzeichnet, dass** der Körper (10) der Federklemme durch Schmelzen eines Kunststoffharzes, wie PBT (Polybutylenterephthalat) oder PA (Polyamid-Nylon), oder eines anderen Materials hergestellt wird, das wärmeinkompatibel mit dem Material ist, aus dem der Ring (11) hergestellt ist.

4. Sicherheitsfederklemme (10), welche mit vorderen Kupplungsmitteln (13) und einem hinteren Stift (12) mit einem verbreiterten Kopf ausgestattet ist, und welche mit einem sich drehenden Ring (11) verbunden ist, **dadurch gekennzeichnet, dass** der Körper der Federklemme aus einem ersten Kunststoffmaterial hergestellt ist, dadurch, dass der Körper des sich drehenden Rings (11) mit einem Kragen (14) ausgestattet ist und aus einem zweiten Kunststoffmaterial hergestellt ist, und dadurch, dass das erste und zweite Kunststoffmaterial intrinsisch inkompatibel miteinander sind oder inkompatibel gemacht werden und nicht miteinander verschmolzen oder in irgendeiner Weise verschweißt werden können, und dadurch, dass der Körper des Stifts (12) und der Kragen (14) des Rings eine Form eines Kegelstumpfs oder Pyramidenstumpfs aufweisen.

5. Federklemme nach Anspruch 4, **dadurch gekennzeichnet, dass** diese durch ein Verfahren nach einem der Ansprüche 1 bis 3 erhalten wird.

## Revendications

1. Procédé pour réaliser une liaison rotative d'une attache à ressort de sûreté automatique avec une bague rotative (11), l'attache à ressort étant constituée d'un corps (10) équipé à l'avant d'un moyen d'accouplement (13) et à l'arrière d'une goupille à tête élargie (12) fixée à une bague (11) comportant une ouverture bordée par une collerette fermée (14) dont le plan est à angles droits par rapport au plan de la bague (11), par lequel le corps de la goupille (12) est formé de manière à épouser la forme de la collerette (14), le corps de la goupille (12) et la collerette (14) de la bague ayant une forme de cône tronqué ou de pyramide tronquée, **caractérisé en ce que** l'attache à ressort et la bague sont reliées de la manière suivante :
a) mouler la bague (11), munie d'une collerette (14), à l'aide d'une première matière plastique soumise au thermo-moulage et à la solidification, et fabriquer une bague pourvue d'un trou et présentant une collerette (14) pourvue d'une ouverture dont le centre définit l'axe de rotation ;
b) insérer la bague obtenue à l'étape a) dans le logement relatif d'un moule pour la formation du corps (10) d'une attache à ressort pourvue d'une partie arrière constituée d'une goupille (12) comportant un corps, pouvant être accouplé à l'ouverture de la collerette (14), et une tête élargie ;
c) mouler le corps de l'attache à ressort à l'aide d'une deuxième matière plastique soumise à la thermo-fusion et à la solidification, cette deuxième matière plastique étant intrinsèquement incompatible ou rendue incompatible lors de la fusion avec la première matière avec laquelle la bague (11) est réalisée ;
d) une fois la solidification obtenue, translater axialement la bague par rapport au corps de la goupille (12) afin de créer un jeu entre les surfaces respectives présentant une forme de cône tronqué ou de pyramide tronquée par désengagement de celles-ci les unes des autres, ce qui permet une rotation libre de la bague (11) autour de la goupille (12).

2. Procédé selon la revendication 1, **caractérisé en ce que** la bague (11) est réalisée en résine acétal telle que du POM, polyoxyméthylène.

3. Procédé selon l'une des revendications précédentes, **caractérisé en ce que** le corps (10) de l'attache à ressort est réalisé par fusion d'une résine plastique telle que du PBT (téréphtalate de polybutylène) ou du PA (polyamide - nylon), ou d'une autre matière qui est incompatible thermiquement avec la matière avec laquelle la bague (11) est réalisée.

4. Attache à ressort de sûreté (10) équipée de moyens d'accouplement avant (13) et d'une goupille arrière (12) avec une tête élargie, reliée à une bague rotative (11), **caractérisée en ce que** le corps de l'attache à ressort est réalisé à partir d'une première matière plastique, **en ce que** le corps de la bague rotative (11) est équipé d'une collerette (14) et est réalisé à partir d'une deuxième matière plastique, **en ce que** les première et deuxième matières plastiques sont intrinsèquement incompatibles ou rendues incompatibles l'une avec l'autre et ne peuvent être ni fusionnées, ni soudées entre elles de quelque manière que ce soit et **en ce que** le corps de la goupille (12) et la collerette (14) de la bague ont une forme de cône tronqué ou de pyramide tronquée.

5. Attache à ressort selon la revendication 4, **caractérisée en ce qu'**elle est obtenue au moyen d'un procédé selon l'une quelconque des revendications 1 à 3.
